Europäisches Patentamt

**European Patent Office**

Office européen des brevets

(11) Numéro de publication : **0 093 470**
**B1**

# (12) FASCICULE DE BREVET EUROPÉEN

(45) Date de publication du fascicule du brevet :
**20.08.86**

(21) Numéro de dépôt : **83200569.8**

(22) Date de dépôt : **19.04.83**

(51) Int. Cl.⁴ : **G 03 B 17/02**

(54) **Dispositif de verrouillage de sécurité pour un couvercle de boîte, chargeur de caméra et caméra utilisant un tel dispositif.**

(30) Priorité : **23.04.82 FR 8207011**

(43) Date de publication de la demande :
**09.11.83 Bulletin 83/45**

(45) Mention de la délivrance du brevet :
**20.08.86 Bulletin 86/34**

(84) Etats contractants désignés :
**CH DE FR GB LI**

(56) Documents cités :
**DE-C- 722 998**
**US-A- 2 347 732**

(73) Titulaire : **SOCIETE D'OPTIQUE, DE MECANIQUE D'ELECTRICITE ET DE RADIO O.M.E.R.A. - S.E.G.I.D.**
**49, rue Ferdinand Berthoud**
**F-95100 Argenteuil (FR)**
**FR**
**N.V. Philips' Gloeilampenfabrieken**
**Groenewoudseweg 1**
**NL-5621 BA Eindhoven (NL)**
**CH DE GB LI**

(72) Inventeur : **Lamoine, Pierre Roger**
**SOCIETE CIVILE S.P.I.D. 209 rue de l'Université**
**F-75007 Paris (FR)**

(74) Mandataire : **Pyronnet, Jacques et al**
**Société Civile S.P.I.D. 209 rue de l'Université**
**F-75007 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention concerne un boîtier comportant un couvercle dont la mise en place sur le boîtier s'effectue par coulissement dans un plan défini par deux rainures agencées à cet effet sur deux bords opposés du boîtier ou du couvercle et un dispositif de verrouillage du couvercle sur le boîtier.

La boîte ou le boîtier à couvercle coulissant utilisant le dispositif de verrouillage selon l'invention peuvent être destinés à des usages très divers mais l'invention vise plus particulièrement des boîtes (respectivement des tiroirs) pour lesquelles des impératifs de sécurité interviennent pour diverses raisons et qui ne doivent pas s'ouvrir de façon involontaire au cours d'une manipulation maladroite ou en conséquence d'un choc. Il s'agit par exemple de boîtes à pharmacie qu'un enfant ne doit pas pouvoir ouvrir trop facilement, ou d'un boîtier de chargeur de caméra qui doit, après chargement en film rester étanche à la lumière pour éviter de voiler du film vierge ou, ce qui est encore plus regrettable, du film impressionné.

La plupart des boîtes à couvercle coulissant ne comportent pas de verrou de sécurité, le frottement entre le couvercle et le corps de la boîte au niveau des emboîtements étant jugé suffisant pour empêcher une ouverture intempestive du couvercle.

On connaît par contre des boîtes ou boîtiers à couvercle coulissant, tel le boîtier pour chargeur de caméra décrit dans le certificat d'utilité N° 2 452 727 pour lesquels un verrouillage de sécurité peut être nécessaire. Ce verrouillage s'effectue par exemple au moyen de deux vis imperdables à tête molletée, dont la partie non filetée traverse le couvercle et qui se vissent dans des trous taraudés prévus à cet effet à l'intérieur des axes des bobines débitrice et réceptrice. Cette solution assure une bonne sécurité contre une ouverture intempestive du couvercle mais elle est encombrante et demande une manipulation trop longue.

L'invention pallie les inconvénients de l'art antérieur grâce au fait que le dispositif de verrouillage de sécurité décrit en préambule est remarquable en ce qu'il comporte un verrou constitué par un axe épaulé, pouvant coulisser entre deux positions extrêmes à l'intérieur du boîtier contre l'action d'un premier ressort de rappel dans une direction sensiblement perpendiculaire au plan de coulissement du couvercle à partir d'une première position extrême de déverrouillage, une première extrémité de l'axe épaulé pouvant pénétrer dans un logement prévu dans le couvercle sous l'effet d'une force exercée sur ledit axe épaulé des moyens de blocage étant prévus pour bloquer automatiquement ledit axe dans une deuxième position extrême de verrouillage dans laquelle la première extrémité de l'axe épaulé est engagée dans le logement, la deuxième extrémité de l'axe épaulé affleurant le plan d'une paroi du boîtier opposée au couvercle dans ladite première position extrême de déverrouillage, une première échancrure étant agencée à un bord de la paroi du boîtier opposée au couvercle pour permettre un accès limité à la deuxième extrémité.

On obtient ainsi un blocage efficace du couvercle dans le sens du coulissement de ce dernier, ce qui empêche son déverrouillage à la suite d'une traction ou d'un choc qui s'exerceraient sur le couvercle lui-même. La sécurité du verrouillage est complète du fait que l'accès au verrou et notamment à la deuxième extrémité de l'axe épaulé ne peut résulter que d'une intervention volontaire.

Un mode de réalisation préféré de l'invention est remarquable en ce que lesdits moyens de blocage sont constitués par un levier articulé qui s'engage, sous l'action d'un deuxième ressort de rappel, dans une gorge du verrou prévue à cet effet quand cette gorge parvient à son niveau, ce qui établit ladite deuxième position extrême de verrouillage.

Par ailleurs, pour que la sécurité du déverrouillage du couvercle soit complète, l'accès auxdits moyens de blocage ne doit pouvoir résulter que d'une intervention volontaire.

A cet effet un autre mode de réalisation préféré du dispositif de verrouillage selon l'invention est remarquable en ce que lesdits moyens de blocage sont accessibles en vue du déblocage de l'axe épaulé au moyen d'une deuxième échancrure pratiquée dans un bord de la paroi opposée au couvercle et donnant un accès limité à une extrémité libre des moyens de blocage.

La description qui suit en regard des dessins annexés, le tout donné à titre d'exemple notamment pour un boîtier de chargeur de caméra, fera bien comprendre comment l'invention peut être réalisée.

La figure 1 représente en élévation et en coupe avec arrachement un mode de réalisation du dispositif de verrouillage de sécurité selon l'invention.

La figure 2 représente vu de dessous avec arrachement le mode de réalisation du dispositif de verrouillage de sécurité de la figure 1.

La figure 3 représente vus de face et en perspective un boîtier de chargeur de caméra et la caméra à laquelle il est destiné, selon l'invention.

La figure 4 représente vus de côté le boîtier de chargeur et la caméra de la figure 1 lors de la solidarisation du premier à la seconde.

Sur les différentes figures, les mêmes références désignent les mêmes éléments avec les mêmes fonctions.

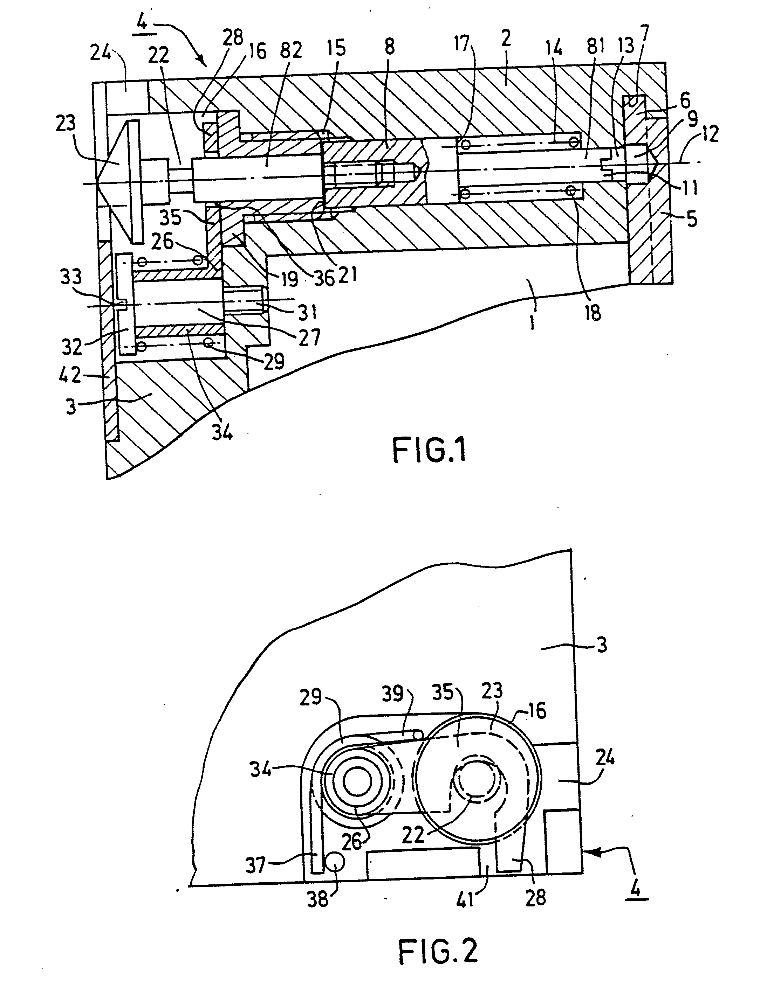

A la figure 1 est représentée par deux parois latérales, la paroi 1 vue en plan avec arrachement, la paroi 2 vue en coupe et par une paroi 3 constituant le fond vu en coupe, une boîte ou un boîtier 4. Un couvercle 5 est solidarisé à la boîte 4 par coulissement de façon à constituer sa paroi

2

supérieure. A cet effet, au moins deux bords parallèles du couvercle, tels que 6, éventuellement feuillurés, sont glissés dans des rainures 7 pratiquées dans les bords supérieurs de la boîte. Ce mode d'assemblage peut être inversé, les rainures étant pratiquées dans l'épaisseur des bords du couvercle, en correspondance avec des nervures élaborées à la partie supérieure des bords de la boîte. Le moyen général de l'invention consiste à munir intérieurement la boîte d'un axe sous la forme d'une pièce allongée telle que 8 constituant le verrou, pouvant coulisser dans un sens parallèle aux parois latérales de la boîte, sans débattement possible dans les autres directions, à élaborer dans le couvercle un logement 9 situé en regard de l'axe lorsque boîte et couvercle sont solidarisés et, pour obtenir le verrouillage du couvercle, à faire coulisser l'axe jusqu'à ce qu'une de ses extrémités 11 pénètre dans le logement 9. Le couvercle est alors bloqué dans toutes les directions parallèles au plan du couvercle et notamment dans la direction de coulissement du couvercle sur la boîte.

Dans le but de faciliter le verrouillage décrit ci-dessus, pour que ce verrouillage soit de sécurité et éventuellement pour faciliter le déverrouillage, les agencements supplémentaires suivants sont prévus :

Pour obtenir un bon maintien du verrou dans le sens latéral, ce dernier est logé dans l'épaisseur même de la paroi 2. Ce mode de réalisation préféré s'applique notamment à un boîtier pour chargeur de caméra. Le logement du verrou est constitué par une succession d'alésages ou de taraudages, dont l'axe commun 12 débouche dans le logement 9 du couvercle mis en place, et dont le diamètre va en augmentant de la partie supérieure à la partie inférieure de la boîte. Il s'agit, dans cet ordre, d'un alésage 13, d'un alésage 14, d'un taraudage 15 et d'un alésage 16. Le verrou 8 est constitué en deux parties, une partie supérieure 81 et une partie inférieure 82 qui peuvent être solidarisées par vissage. La partie supérieure 81 comporte deux axes cylindriques coaxiaux séparés entre eux par un épaulement 17 et conçus pour entrer à coulissement dans les alésages 13 et 14 respectivement. Un premier ressort de rappel 18 s'appuyant contre l'épaulement 17 est logé dans l'alésage 14. Après mise en place des éléments 18 puis 81, une vis 19 alésée en son centre est introduite dans le taraudage 15 et vissée jusqu'à ce que son extrémité supérieure soit en appui contre la face inférieure 21 de la partie 81 du verrou, de façon telle que le ressort 18 soit légèrement comprimé. La partie inférieure 82 du verrou est constituée par un axe cylindrique muni d'une gorge 22 et dont l'extrémité proche de la gorge est constituée par une tête 23 de préférence évasée et de forme sensiblement conique qui s'identifie avec la deuxième extrémité ou extrémité inférieure du verrou 8. La partie 82 entre à coulissement dans l'alésage de la vis 19 et se visse, au moyen de son extrémité éloignée de la gorge qui comporte un filetage, dans l'extrémité inférieure taraudée de la partie 81. Lorsque le montage du verrou 8 est terminé, la gorge 22 se situe dans l'alésage 16 et, de préférence, la tête conique 23 affleure la surface inférieure de la paroi 3. On notera que le verrou 8 pourrait être constitué d'une seule pièce, à la condition que son extrémité inférieure ne soit pas plus évasée que l'axe cylindrique qui la porte, ou que la tête évasée 23 soit rapportée par vissage. De préférence, la paroi 2 comporte à son bord inférieur, en regard de la tête 23, une première échancrure 24 qui permet un accès limité au moins à la partie conique de la tête 23. En exerçant une pression suffisante dans le sens latéral ou dans le sens vertical contre cette partie conique, le verrou 8 se déplace contre l'action du ressort 18 et l'extrémité supérieure 11 du verrou pénètre dans le logement 9. Pour maintenir le verrou dans cette position de verrouillage, des moyens de blocage sont nécessaires. Ces moyens sont, de préférence, constitués comme représenté à la figure 1 par un levier 26 articulé autour d'un axe 27, dont l'extrémité libre 28 peut s'engager dans la gorge 22 sous l'action d'un ressort de rappel 29, et logés dans un évidement constitué par un agrandissement de l'alésage 16 obtenu au moyen d'un usinage approprié des parois du boîtier 4. L'axe 27 est par exemple constitué par la partie non filetée avec épaulement de la tige d'une vis qui comporte une partie filetée 31 et une tête 32 munie de moyens de vissage, une fente pour tournevis 33 par exemple pour la fixation de la vis dans la paroi inférieure 3. Le levier articulé 26 comporte une partie annulaire 34, montée à glissement autour de l'axe 27, ainsi qu'un bras 35 solidaire de la partie 34, le bras 35 comportant l'extrémité libre 28. Le bras 35 est maintenu en appui au niveau d'une échancrure 36 contre la partie 82 du verrou, au moyen du deuxième ressort de rappel 29 logé autour de la partie 34 du levier articulé.

La figure 2 indique comment l'usinage de la paroi 3 peut être effectué et permet de mieux comprendre le fonctionnement des moyens de rappel. A la figure 2, le bras 35 du levier articulé est représenté engagé dans la gorge 22, ce qui permet le maintien du verrou 8 dans sa position de verrouillage de sécurité. Pour simplifier le dessin, la vis de support à rotation du levier articulé n'a pas été représentée. Le ressort 29, hélicoïdal, comporte une extrémité 37 qui est en appui contre un pion 38 fixé à la paroi 3 et une extrémité 39 qui est en appui contre le bras 35. L'extrémité 39 peut être pliée et appuyer directement contre le bord du bras 35 comme représenté à la figure 2 ou bien être droite et appuyer contre un pion solidaire du bras 35. De préférence une deuxième échancrure 41 est pratiquée dans un bord de la boîte opposé au couvercle de façon à permettre un accès limité à l'extrémité 28 du levier articulé. On notera, sur la figure 2 que les échancrures 24 et 41 sont pratiquées dans des bords différents du boîtier 4. Ceci n'est pas obligatoire, les deux échancrures 24 et 41 pouvant être situées sensiblement côte à côte, dans le même bord. Pour obtenir le déverrouillage du couvercle à partir de la position de verrouillage représentée à la figure 2, il suffit d'appuyer contre l'extrémité du levier 28 à travers l'échancrure 41, ce qui a pour effet de repousser, contre l'action du ressort 29, le bras 35 qui se désengage de la gorge 22. Le verrou constitué par les éléments 8 et 23 repasse alors à sa position de déverrouillage représentée à la figure 1 sous l'action du ressort de rappel 18. Le verrouillage ou le déverrouillage s'effectuent par exemple avec l'ongle à travers les échancrures 24 ou 41.

Les usinages nécessaires pour le montage et le débattement nécessaire des différents éléments mobiles décrits ci-dessus s'effectuent de préférence à partir d'un seul côté, l'axe des différents outils étant, en l'occurrence, parallèle aux parois 1 et 2 du boîtier. Ces usinages consistent en deux perçages, un taraudage, un défonçage et un lamage. Le défonçage et le lamage, effectués dans la paroi 3 pour loger les moyens de blocage et réaliser les échancrures s'effectuent par exemple par contournage, au moyen d'une seule fraise à déplacement par commande numérique.

A titre d'équivalent technique, les moyens de blocage décrits ci-dessus peuvent aussi être constitués, de façon non représentée, par une seule pièce sous la forme d'un bras élastique, par exemple une lame-ressort flexible, dont une partie viendrait s'engager à pression dans la gorge 22. Dans le cas où le bras élastique est de section circulaire, il faut prévoir des moyens de guidage au moins sur une partie de son cheminement afin de conserver une rigidité suffisante dans le sens axial, c'est-à-dire parallèle à l'axe du verrou. Il est aussi possible d'utiliser des moyens de blocage se déplaçant selon un mouvement de translation rectiligne sous l'action d'un ressort de rappel hélicoïdal logé dans un alésage d'axe perpendiculaire à l'axe du verrou.

Eventuellement, une plaque 42, figure 1, fixée par tout moyen connu à la paroi 3, recouvre en partie les moyens de blocage et/ou la tête 23 du verrou de façon à ne laisser ouvertes que les parties souhaitées pour l'accès au dispositif de verrouillage.

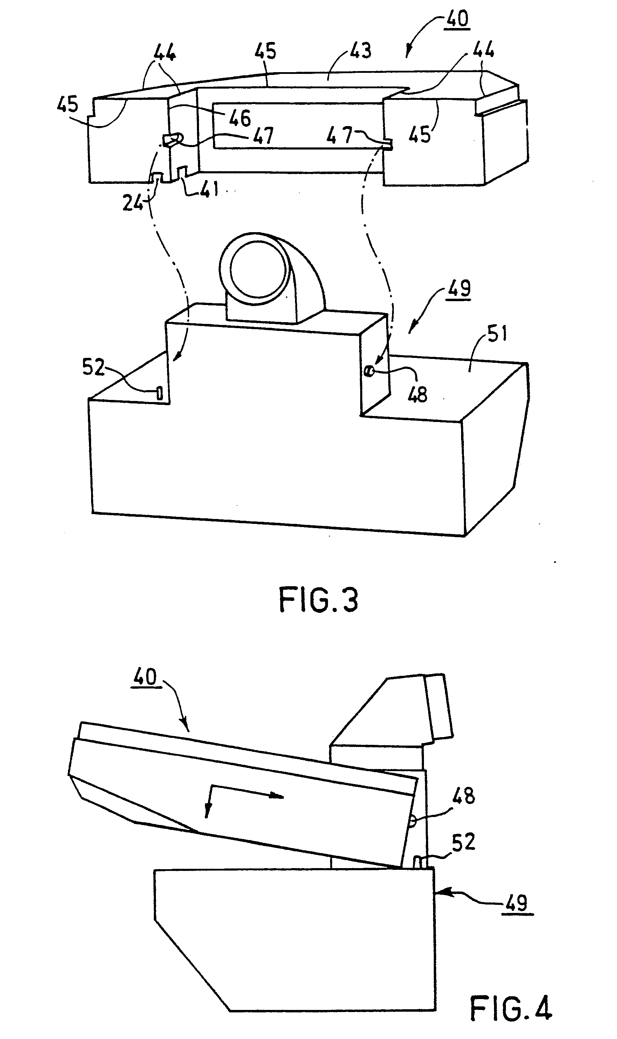

L'invention s'applique de préférence à un boîtier pour chargeur de caméra par exemple comme représenté en 40 en haut de la figure 3. Le couvercle 43 est monté à coulissement dans des rainures non visibles sur le dessin, pratiquées dans les bords supérieurs latéraux 44 du boîtier. De préférence le couvercle pénètre aussi dans des rainures pratiquées dans les bords supérieurs avant 45 du boîtier, ce qui permet d'éviter une entrée de lumière au niveau des bords 45. Dans ces conditions, lorsque le couvercle est en place, le seul déplacement possible est d'avant en arrière par rapport au boîtier. Ce mouvement est rendu au besoin impossible grâce au verrou de sécurité décrit ci-dessus, qui est logé dans les parois du boîtier par exemple en retrait de l'arête verticale 46. Le boîtier ayant par exemple la forme en U indiquée sur le dessin et des points d'ancrage passifs vers l'avant constitués par des mortaises 47 coopérant avec des tenons 48 sur le corps 49 d'une caméra à un emplacement complémentaire en vue de la solidarisation du chargeur avec le corps de la caméra, on peut prévoir que l'opération de verrouillage du couvercle du boîtier de chargeur s'effectue automatiquement lors de la mise en place du chargeur sur le corps, à supposer que ledit verrouillage n'ait pas été effectué antérieurement à cette mise en place, par exemple avec l'ongle ou à l'aide d'un outil approprié si l'accès à la deuxième extrémité du verrou est très limitée. A cette fin, le corps de la caméra comporte à une face supérieure 51 un doigt 52 placé en regard de l'échancrure 24 lorsqu'on engage le boîtier de chargeur contre le corps de la caméra. Comme il est visible sur la vue latérale de la figure 4, les tenons 48 sont de préférence situés légèrement en retrait vers l'arrière par rapport au doigt 52 de façon qu'au moment de la solidarisation entre boîtier et corps les tenons 48 soient déjà engagés dans les mortaises 47 avant que le doigt 52 n'entre en contact avec la surface conique de la tête 23 du verrou. Le boîtier étant ensuite enfoncé à fond vers l'avant, le doigt 52 repousse la tête 23 du verrou jusqu'à ce que le bras 35 du levier articulé pénètre dans la gorge 22, la partie avant du boîtier ne pouvant pas remonter, sous l'action du ressort de rappel 18 du verrou, à cause du maintien de cette partie avant par les tenons 48 engagés dans les mortaises 47. On notera que l'emplacement choisi pour l'échancrure 41, figure 3, est tel que le déverrouillage du couvercle 43 soit impossible lorsque le chargeur est en place sur le corps, l'échancrure 41 étant alors inaccessible.

**Revendications**

1. Boîtier (4) comportant un couvercle (5), dont la mise en place sur le boîtier s'effectue par coulissement dans un plan défini par deux rainures (7) agencées à cet effet sur deux bords opposés du boîtier ou du couvercle, et un dispositif de verrouillage du couvercle sur le boîtier, caractérisé en ce que le dispositif de verrouillage comporte un verrou (8) constitué par un axe épaulé (12) pouvant coulisser entre deux positions extrêmes à l'intérieur du boîtier (4) contre l'action d'un premier ressort de rappel (18) dans une direction sensiblement perpendiculaire au plan de coulissement du couvercle à partir d'une première position extrême de déverrouillage, une première extrémité (11) de l'axe épaulé (12) pouvant pénétrer dans un logement (9) prévu dans le couvercle sous l'effet d'une force exercée sur ledit axe épaulé (12) des moyens de blocage (22, 26, 28, 35) étant prévus pour bloquer automatiquement ledit axe dans une deuxième position extrême de verrouillage dans laquelle la première extrémité (11) de l'axe épaulé (12) est engagée dans le logement (9), la deuxième extrémité (23) de l'axe épaulé (12) affleurant le plan d'une paroi (3) du boîtier opposée au couvercle dans ladite première position extrême de déverrouillage, une première échancrure (24) étant agencée à un bord de la paroi (3) du boîtier opposée au couvercle pour permettre un accès limité à la deuxième extrémité (23).

2. Boîtier selon la revendication 1, caractérisé en ce que ladite deuxième extrémité (23) de l'axe épaulé (12) a une forme sensiblement conique.

3. Boîtier selon la revendication 1 ou 2, caractérisé en ce que lesdits moyens de blocage sont constitués par un levier articulé (26) qui s'engage, sous l'action d'un deuxième ressort de rappel (29), dans une gorge du verrou (22) prévue à cet effet quand cette gorge parvient à son niveau, ce qui établit ladite deuxième position extrême de verrouillage.

4. Boîtier selon la revendication 3, caractérisé en ce que lesdits moyens de blocage sont accessibles en vue du déblocage de l'axe épaulé (12) au moyen d'une deuxième échancrure (41) pratiquée dans un bord de la paroi (3) opposée au couvercle et donnant un accès limité à une extrémité libre (28) des moyens de blocage.

5. Application du boîtier selon l'une des revendications 1 à 4, à un chargeur de caméra caractérisé en ce que ledit verrou (8) et lesdits moyens de blocage (22, 26, 28, 35) sont logés dans l'épaisseur des parois du boîtier de chargeur.

6. Caméra utilisant un chargeur selon la revendication 5, dans laquelle le corps et le chargeur comportent vers l'avant, dans le but de réaliser un ancrage passif, des tenons (48) sur l'un qui coopèrent avec des mortaises (47) d'emplacement et de forme complémentaires sur l'autre, caractérisée en ce que le corps de la caméra (49) comporte à une face supérieure un doigt (52) disposé en regard du verrou du chargeur de façon telle qu'après l'introduction des tenons dans les mortaises lors de l'engagement du chargeur sur le corps, ledit doigt repousse la deuxième extrémité (23) de l'axe du verrou jusqu'à ce que le verrouillage de sécurité du couvercle du chargeur soit obtenu.

## Claims

1. A housing (4) comprising a cover (5) which can be positioned on the housing by sliding in a plane defined by grooves (7) provided for this purpose in two opposite edges of the housing or of the cover, and a device for locking the cover on the housing, characterized in that the locking device comprises a safety-lock (8) constituted by a shouldered shaft (12) which is adapted to slide between two extreme positions inside the housing (4) against the action of a first release spring (18) in a direction substantially perpendicular to the sliding plane of the cover from a first extreme unlocking position, a first end (11) of which shaft (12) can enter a recess (9) provided in the cover under the influence of a force exerted on the shaft (12), blocking means (22, 26, 28, 35) being provided for automatically blocking the shaft in a second extreme locking position in which the first end (11) of the shouldered shaft (12) is received by the recess (9), the second end (23) of the shouldered shaft (12) being flush with the plane of a wall (3) of the housing opposite the cover in the first extreme unlocking position, and a first groove (24) being provided in an edge of the housing wall (3) opposite the cover to enable a limited access to the second end (23) of the shaft (12) to be obtained.

2. A housing as claimed in Claim 1, characterized in that the second end (23) of the shouldered shaft (12) has a substantially conical form.

3. A housing as claimed in Claim 1 or 2, characterized in that the blocking means are constituted by a pivotal lever (26) which is received under the action of a second release spring (29) by a notch of the lock (22) provided for this purpose when this notch reaches its level, which establishes said second extreme locking position.

4. A housing as claimed in Claim 3, characterized in that the blocking means are accessible for unlocking the shouldered shaft (12) by means of a second groove (41) provided in an edge of the housing wall (3) opposite the cover and giving a limited access to the free end (28) of the blocking means.

5. A housing as claimed in any one of Claims 1 to 4 used in a magazine for a camera, characterized in that the lock (8) and the blocking means (22, 26, 28, 35) are accommodated within the thickness of the walls of the housing of the magazine.

6. A camera using a magazine as claimed in Claim 5 in which the body and the magazine comprise in forward direction, for obtaining a passive anchorage, projections (48) on the former which co-operate with positioning slots (47) of complementary form in the latter, characterized in that the body of the camera (49) comprises at an upper surface a finger (52) arranged opposite the lock of the magazine so that after the projections have been introduced into the slots during the positioning of the magazine on the body the finger pushes the second end (23) of the shaft of the lock back until safety-locking of the cover of the magazine is obtained.

## Patentansprüche

1. Gehäuse (4) mit einem Deckel (5), dessen Positionierung auf dem Gehäuse durch die Verschiebung des Deckels in einer von zwei Rillen (7) bestimmten Ebene erfolgt, die zu diesem Zweck an zwei einander gegenüberliegenden Seiten des Gehäuses oder des Deckels angeordnet sind, und mit einer Sicherheitsverriegelung für den Gehäusedeckel, dadurch gekennzeichnet, dass die Sicherheitsverriegelung einen Riegel (8) enthält, der aus einem Schulterschaft (12) besteht, der zwischen zwei Endpositionen im Innern des Gehäuses (4) entgegen der Wirkung einer ersten Freigabefeder (18) in einer im wesentlichen senkrecht zur Verschiebungsebene des Deckels verlaufenden Richtung aus einer ersten Endposition der Entriegelung verschieben kann, wobei ein erstes Ende (11) des Schulterschafts (12) in einer Lagerungsstelle (9) im Deckel unter der Einwirkung einer auf den genannten Schulterschaft (12) ausgeübten Kraft eintreten kann, wobei Blockierungsmittel (22, 26, 28, 35) zum automatischen Blockierung des Schaftes in einer ersten Endstellung der Verriegelung vorgesehen sind, und in dieser Stellung das erste Ende (11) des Schulterschaftes (12) in der Lagerung (9) festgehalten wird, wobei das zweite Ende (23) des Schulterschafts (12) mit der Ebene einer dem Deckel in der ersten Endposition der Entriegelung gegenüberliegenden Wand (3) des Gehäuses fluchtet, wobei ein erster Ausschnitt (24) in einem Rand der gegenüber dem Deckel liegenden Wand (3) des Gehäuses angeordnet ist, um einen begrenzten Zugang zum zweiten Ende (23) zu erlauben.

2. Gehäuse nach Anspruch 1, dadurch gekennzeichnet, dass das genannte zweite Ende (23) des Schulterschaftes (12) eine im wesentlichen konische Form hat.

3. Gehäuse nach Ansprüche 1 oder 2, dadurch gekennzeichnet, dass die Blockierungsmittel aus einem Kniehebel (26) bestehen, der unter der Einwirkung einer zweiten Freigabefeder (29) in eine dazu vorgesehen Auskehlung (22) des Riegels greift, wenn diese Auskehlung beim Kniehebel angelangt ist, womit gleichzeitig die zweite Endposition der Verriegelung bestimmt ist.

4. Gehäuse nach Anspruch 3, dadurch gekennzeichnet dass die Blockierungsmittel zur Entriegelung des Schulterschafts (12) mit Hilfe eines zweiten Ausschnitts (41) im Rand der dem Deckel gegenüberliegenden Wand (3) zugänglich sind und einen beschränkten Zugang zu einem freien Ende (28) der Blockierungsmittel gibt.

5. Verwendung des Gehäuses nach einem der Ansprüche 1 bis 4 für eine Kameracassette, dadurch gekennzeichnet, dass der genannte Riegel (8) und die genannten Blockierungsmittel (22, 26, 28, 35) in der Dicke der Wände des Cassettengehäuses lagern.

6. Kamera mit einer Kameracassette nach Anspruch 5, in der der Körper und die Cassette in Vorwärtsrichtung zur Verwirklichung einer passiven Verankerung Ansätze (48) auf dem einen, die mit Positionierungsschlitzen (47) zusammenarbeiten, und von komplementärer Form auf der anderen enthalten, dadurch gekennzeichnet, dass der Kamerakörper (49) auf einer oberen Fläche einen Nocken (52) gegenüber dem Riegel der Cassette derart enthält, dass nach dem Einführen der Ansätze in die Positionierungsschlitze beim Einführen der Cassete in den Körper der genannte Nocken das zweite Ende (23) des Schulterschafts zurückdrückt, bis die Schutzverriegelung des Cassettendeckels erhalten ist.

FIG.1

FIG.2

FIG.3

FIG.4

2